# EUROPEAN PATENT SPECIFICATION

(11) **EP 2 255 563 B1**
(45) Date of publication and mention of the grant of the patent: **08.02.2012**
(21) Application number: 08873657.4
(22) Date of filing: 30.12.2008
(51) Int. Cl.: H04W 24/02

(54) **METHOD AND COMMUNICATION NETWORK NODE IN A COMMUNICATION NETWORK SYSTEM**
VERFAHREN UND KOMMUNIKATIONSNETZKNOTEN IN EINEM KOMMUNIKATIONSNETZSYSTEM
PROCÉDÉ ET NOEUD DE RÉSEAU DE COMMUNICATION DANS UN SYSTÈME DE RÉSEAU DE COMMUNICATION

(30) Priority: 25.03.2008 US 39219 P
(43) Date of publication of application: 01.12.2010
(73) Proprietor: Telefonaktiebolaget L M Ericsson (PUBL), 164 83 Stockholm (SE)
(72) Inventor: RUNE, Johan, Lidingö SE-181 30 (SE); MOE, Johan, SE-590 17 Mantorp (SE); ENGSTRÖM, Stefan, SE-583 32 Linköping (SE); DAHLÉN, Anders, SE-137 34 Västerhaninge (SE)
(74) Representative: Kühn, Friedrich Heinrich
(86) International application number: PCT/SE2008/051578
(87) International publication number: WO 2009/120127

(56) References cited:
- EP-A- 1 124 400
- 3GPP: "3rd Generation Partnership Project;Technical Specification Group Services and System Aspects;General Packet Radio Service (GPRS) enhancements for Evolved Universal Terrestrial Radio Access Network (E-UTRAN) access(Release 8)" 3GPP DRAFT; 23401-800, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_sa\WG3_Security\TSGS3_LI\2008_28_Sophi a\Docs, no. Sophia; 20080205, 13 December 2007 (2007-12-13), XP050282132
- ZTE: "Generation of Neighbour Relations" 3GPP DRAFT; R3-080077, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_ran\WG3_Iu\TSGR3_59\docs, no. Sorrento, Italy; 20080211, 1 February 2008 (2008-02-01), XP050163310

## Description

### TECHNICAL FIELD

The present invention relates to a method and a communication network node in a communication network system and, more particular, to a radio base station allowing for establishing a relation between a newly detected radio base station and existing radio base stations as well as a method for such establishment.

### BACKGROUND

The demand for wireless data services, such as text messaging (SMS), multi-media messaging (MMS), mobile video and IPTV, demanding higher bandwidth is growing quickly. The third generation partnership project (3GPP) is developing the third generation mobile systems based on evolved GSM core networks and the radio access technology UMTS terrestrial radio access (UTRA) and has come up with a new orthogonal frequency division multiple access (OFDMA) based technology through the long term evolution (LTE) work which provides a very efficient wireles solution. The OFDMA based air interface is often referred to as the evolved UMTS terrestrial radio access network (EUTRAN). To support the EUTRAN a new core network, the evolved packet core (EPC) is being developed within the system architecture evolution (SAE) work. The E-UTRAN and EPC together has recently been named the evolved packet system (EPS) architecture.

In its most basic form, the EPS architecture consists of only two nodes in the user plane, the radio base station, evolved NodeB (eNBs), and a core network serving gateway (S-GW). The EPS architecture further comprises a mobility management entity (MME), which performs control-plane functionality and manages mobility, user equipment (UE) identities and security parameters.

In EPS each eNB may be connected to several MMEs at the same time. Different UEs, served by the same eNB, are controlled by different MMEs. In this way the load is distributed between several MMEs by assigning UEs to different MMEs. When one MME fails, the eNB may continue operation while connected to the other MMEs. The UEs that were earlier served by the failed MME, will be served by other MMEs.

MMEs that control UEs in the same area are arranged into groups called MME Pools. An area controlled by an MME Pool is called an MME Pool Area. MME Pool Areas may overlap and the eNBs in the overlapping area, then has contact with MMEs in several MME Pools.

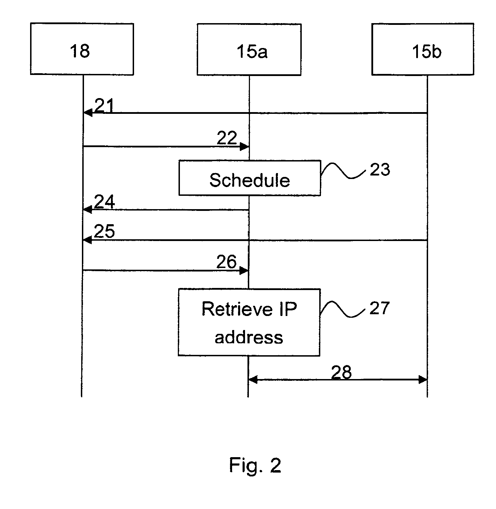

In most cellular systems, creation of neighbour cell relations is a management task consisting of configuration. However, in LTE this method is abandoned in favor of automatic detection of neighbour cells aided by UEs and subsequent automatic creation of the neighbour relation, establishment of the X2 interface and exchange of relevant information between the involved eNBs (unless the neighbouring cells belong to the same eNB in which case the neighbour relation creation, albeit possibly not neighbour detection, is an entirely eNB internal matter). The automatic neighbour relation process is illustrated in figure 2, in which the UE is denoted 18, the serving eNB is denoted 15a and the neighbour eNb is denoted 15b.

The currently planned approach within the third generation partnership project (3GPP) is to use measurement reports from active UEs to detect neighbour cells. The reports include the physical cell identities (PCIs) of detected cells as well as data concerning measurements of the transmissions received in the detected cell, shown as arrows 21 and 22 in fig. 2.

When a PCI that is new to the eNB is reported, the eNB requests the UE to read and report the cell global identity (CGI) of the cell with the concerned PCI, shown as arrow 24 in fig. 2.

This requires that the eNB schedules a measurement gap (or transmission gap), i.e. a gap in the regular transmissions to and from the UE, during which the UE may tune and synchronize its receiver to the other cell until the CGI has been received, shown as step 23 in fig. 2.

When the UE has reported the CGI of the detected candidate neighbour cell, illustrated with arrows 25 and 26, the eNB concludes that the cell belongs to the same public land mobile network (PLMN) as the eNB itself and may choose to establish a neighbour relation with the detected cell. It may then use the reported CGI to retrieve the IP address of the eNB to which the detected cell belongs, step 27 in fig. 2, establish the X2 interface towards this eNB, unless the X2 interface was already established and exchange information which is relevant for the X2 interface and the neighbour relation, step 28 in fig. 2. The process of building neighbour cell lists in this manner is referred to as Automatic Neighbour Relation (ANR).

The ends IP address retrieval based on the CGI of the detected cell (step 27) is generally assumed to be done using the Domain Name System (DNS). A Fully Qualified Domain Name (FQDN) would be derived from the CGI or the CGI would itself be used as an FQDN. The eNB serving the detecting/reporting UE could send this FQDN in a DNS request to a DNS server which would return the IP address of the concerned eNB.

The initial phase of the ANR process, i.e. detecting and reporting neighbour cell data by the UE, is well described and the eNB IP address retrieval through DNS is reasonably well understood, but the remainder of the ANR procedure is more or less unspecified in the 3GPP.

The use of DNS for translation of CGI to eNB IP address requires a configuration effort for the DNS server, since the DNS server has to be reconfigured whenever an eNB IP address or CGI (or other identifier used in conjunction with DNS lookups) is changed. If the IP address of an eNB is changed, the change will not take effect in affected nodes until their DNS caches time out.

Therefore, there has been a desire to improve the method of establishing an inter-eNB cell relation and, if desired, an X2 interface upon detection and reporting of a new potential neighbour cell belonging to another eNB than the serving eNB.

3GPP Technical Specification "TS 23,401 V8.0.0 (2007-12), 3rd Generation Partnership Project; Technical Specification Group Services and System Aspects; General Packet Radio Service (GPRS) enhancements for Evolved Universal Terrestrial Radio Access Network (E-UTRAN) access (Release 8)" defines the Stage 2 service description for the Evolved 3GPP Packet Switched Domain - also known as the Evolved Packet System (EPS) throughout the document. The Evolved 3GPP Packet Switched Domain provides IP connectivity using the Evolved Universal Terrestrial Radio Access Network (E-UTRAN). The technical specification covers both roaming and non-roaming scenarios and covers all aspects, including mobility between E-UTRAN and pre-E-UTRAN 3GPP radio access technologies, policy control and charging, and authentication. Radio Access Network functionality in terms of handover is also discussed. Specifically, handover is discussed where handover may be triggered when no X2 connectivity to a target eNodeB is detected.

European Patent No. 1 124 400 is directed towards a controlled handover process. At least portions of the map of the base stations, i.e., which base stations are neighbors, is discovered and updated using a wireless terminal controlled handoff process. The portion of the map that is discovered by a particular base station is typically its neighbors to which -it can possibly hand off a call it is serving. It takes at least one handoff with each such base station neighbor for the particular base station to discover its entire local map, i.e., all the base stations to which the particular base station can perform handoffs. The wireless terminal handoff process is used to supply a base station with information about other base stations with whom the base station can cooperate to perform handoffs. The handoff process may subsequently be performed more expeditiously between the particular base station and such other base stations using the obtained information.; As part of the handoff process, the wireless terminal tells the new base station to which it is handing off the call the identity of the previous base station from which control is being handed off. The wireless terminal then completes handoff and begins to be served by the new base station. If the new base station does not have a valid record for the previous base station, it forms a trust relationship with the previous base station and creates a record for it, thus identifying it as a neighbor to which it can perform expedited handoff in response to the control of a wireless terminal.

### SUMMARY

One object of embodiments of the present invention is to provide an improved method and an improved communication unit for establishing a relation between a newly detected radio base station and existing radio base stations in a communication network system. The communication network system comprises radio base stations each serving at least one cell and communicating with at least one communication network entity on a first communication interface, communicating with each other on a second communication interface, and communicating with user equipments over a radio interface.

According to the present invention, there is a method provided according to claim 1 and a communication unit according to claim 7.

Further embodiments are listed in the dependent claims.

Thanks to the provision of a method and a communication network node, in which the first handover between two eNBs is always performed over the S1/S10 interfaces prior to an establishment has been done on the X2 interface, the neighbour relation and X2 establishments become non-time critical.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

### BRIEF DESCRIPTION OF THE DRAWINGS

In the drawings, wherein like reference characters denote similar elements throughout the several views:
Figure 1 shows an example of a LTE communication network architecture;
Figure 2 shows the automatic neighbour relation (ANR) process according to prior art;
Figure 3 shows another example of a LTE communication network architecture;
Figure 4 is a signalling diagram of an ANR process and an initial S1 intra-MME pool handover according to a first embodiment of the present invention;
Figure 5 is a signalling diagram of an ANR process and an initial S1 inter-MME pool handover according to a second embodiment of the present invention;
Figure 6 is a signalling diagram of an ANR process and an initial intra-MME pool handover between a certain pair of cells, whose eNBs already share a mutual X2 interface;
Figure 7 is a signalling diagram of a subsequent inter-MME pool handover;
Figure 8 is a signalling diagram of a subsequent X2 handover;
Figure 9 is a simplified block diagram of a user equipment, a radio base station and an MME unit.

### DETAILED DESCRIPTION

I this document the terms "detecting eNB", "serving eNB" and "source eNB" are used more or less interchangeably to denote the eNB to which a UE reports a detected potential neighbour cell.

The terms "detected eNB" and "target eNB" are used more or less interchangeably to denote the eNB to which the detected cell belongs.

Similarly, the terms "detecting MME", "serving MME" and "source MME" are used more or less interchangeably to denote the MME to which a detecting/serving/source eNB is connected and the terms "detected MME" and "target MME" are used more or less interchangeably to denote the MME to which the detected/target eNB is connected.

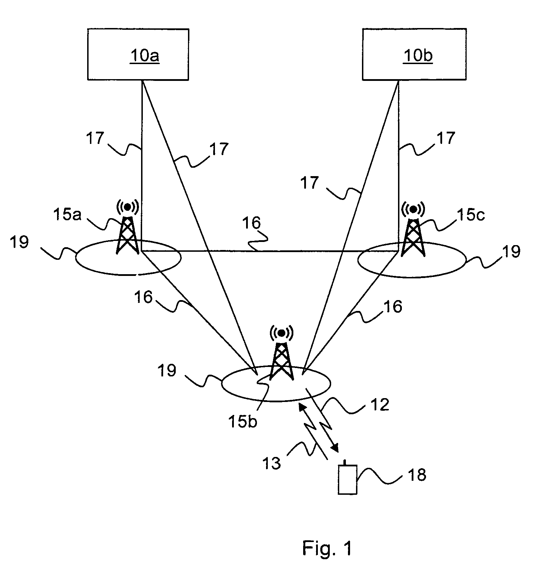

Figure 1 depicts a communication system, including a radio access system (RAN) such as E-UTRAN, comprising at least one Radio Base Station (RBS), such as evolved Node B (eNB) 15a, 15b and 15c. The RAN is connected over an interface such as the S1-interface 17 to at least one Evolved Packet Core (EPC) network 10a and 10b, which is connected to external networks (not shown in fig. 1) such as the Public Switched Telephone Network (PSTN) or the Integrated Services Digital Network (ISDN), and/or a connectionless external network as the Internet. Each EPC 10a and 10b comprises e.g. a Mobility Management Entity (MME) which handles control signalling for instance for mobility.

The RAN provides communication and control for a plurality of user equipments (UE) 18 (only one shown in fig. 1) and each eNB 15a - 15c is serving at least one cell 19 through and in which the UEs 18 are moving. The eNBs 15a - 15c are communicating with each other over a communication interface 16, such as X2. The UEs each uses downlink (DL) channels 12 and uplink (UL) channels 13 to communicate with at least one eNB over a radio or air interface.

The user equipments 18 may be mobile stations such as mobile telephones ("cellular" telephones) and laptops with mobile termination and thus may be, for example, portable, pocket, hand-held, computer-included or car-mounted mobile devices which communicate voice and/or data with the RAN.

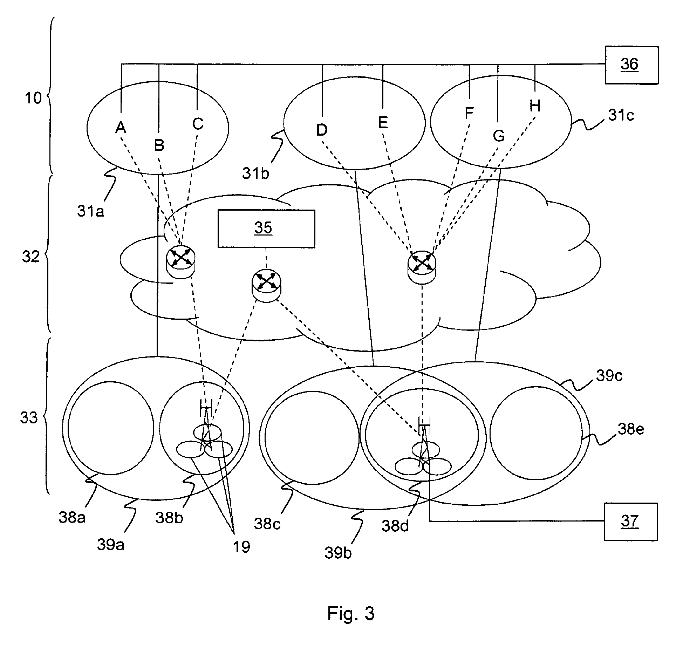

Figure 3 shows another view of the LTE communication network architecture comprising the EPC 10 an IP transport network 32 and the RAN 33. In the EPC 10, MMEs A - H are divided into MME Pools 31a - 31c. The MME is e.g. responsible for idle mode UE tracking and paging procedure including retransmissions. In figure 3, the first MME Pool 31 a comprises three MMEs A, B and C, the second MME Pool 31 b comprises two MMEs D and E and, the third MME Pool 31 c comprises three MMEs F, G and H. All MMEs A - H are controlled by a EPC operation and maintenance node 36. The MMEs are communicating over the S10 interface with each other.

Each MME Pool 31a - 31 c serves an MME Pool area 39a - 39c in the RAN 33. Multiple eNBs controlling cells 19 are grouped into tracking areas (TAs) 38a - 38e each belonging to at least one MME Pool area 39a - 39c. As can be seen from figure 3, MME Pool areas 39b and 39c overlap meaning that eNBs within tracking area 38d may be served by several MMEs D - H in different MME Pools 31 b and 31 c. Each eNB is controlled by a RAN operation and maintenance (RAN O&M) node 37.

A domain name system (DNS) name server 35 is included in the IP transport network 32. The DNS name server 35 maintains a database for resolving domain names into IP addresses and vice versa.

In the initial phase of the automatic neighbour relation (ANR) procedure the UE reports to its serving eNB the PCI and CGI, presumably including the tracking area identity (TAI), i.e. the PLMN ID and the tracking area code (TAC) of a detected potential new neighbour cell.

Using these identifiers it has to be possible to:
- route to the eNB of the new neighbour cell, e.g. retrieve the neighbour (target) eNB's IP address.
- route to the MME pool serving the neighbour eNB in case of an inter-MME pool neighbour relation, e.g. retrieve the IP address of one of the MMEs in the pool.
- point out the specific concerned cell in the neighbour eNB.
- Determine whether the ANR procedure should trigger X2 establishment (e.g. whether the neighbour eNBs belong to the same MME pool) and what the X2 interface should be used for (handover or only other purposes, e.g. ICIC).

The reported identifiers may be used in themselves (directly) to achieve the above or to derive further information which in turn is used to achieve the above.

Furthermore, different relevant operations require different information, without which they will not be able to perform efficiently (or even perform at all). These information requirements are listed below.
1) The decision whether to establish an X2 interface to a newly detected neighbour eNB as well as what a cell neighbour relation should be used for should be based on information about the detected neighbour cell.
   This cell information may consist of :
   - PLMN ID(s).
   - MMEGI(s).
   - Preferably an indication of cell type (e.g. macro, micro, pico, femto...) of the neighbour cell.
   - CGI(s) (to check with a possible configured blacklist, which may block neighbour relation and/or X2 establishment to the detected neighbour cell).
   - Carrier frequency.
   - Possibly the TAI(s).
2) A cell relation requires (at least) the following additional information about the neighbour cell:
   - PCI.
3) X2 establishment requires the following additional address about the neighbour cell:
   - eNB IP address of X2 interface.
4) Hence the following information could be exchanged between the eNBs:
   From the target eNB to the source eNB:
   - eNB IP address for X2 interface.
   - eNB SeGW IP address for X2 interface (in case SeGWs are used)
   - GCI(s) (if not reported to the source eNB by the UE)
   - eNB Identity.
   - eNB Name (a name for the eNB for O&M purpose).
   - PCI.
   - Carrier frequency (i.e. ARFCN).
   - Frequency bandwidth.
   - MMEGI(s).
   - A Closed Subscriber Group (CSG) indication (if available).
   - Cell restricted for operator use indication.
   - Preferably indication of cell type (e.g. macro, micro, pico, femto...).
   - *Comments:*
      - The PCI and carrier frequency are reported by the UE, but not confirmed. Included here for verification.
      - If the TAI is not included in the CGI, it has to be transferred as a separate identifier.
      - A CSG indication may be implicit in an extended TAI.
   From the source eNB to the target eNB:
   - eNB IP address for X2 interface (to allow the target eNB to initiate X2 establishment in case the source eNB chooses not to).
   - eNB SeGW IP address for X2 interface (in case SeGWs are used)
   - eNB Identity.
   - eNB Name (a name for the eNB for O&M purpose).
   - CGI(s),
      - for all PLMN IDs.
   - TAC (if not already included in CGI).
   - PCI.
   - Carrier frequency (i.e. ARFCN).
   - Frequency bandwidth.
   - MMEGI(s).
   - A CSG indication (if available).
   - Cell restricted for operator use indication.
   - Preferably indication of cell type (e.g. macro, micro, pico, femto...).
   - *Comments:*
      - If the TAI is not included in the CGI it has to be transferred as a separate identifier.
      - A CSG indication may be implicit in an extended TAI.

According to a general embodiment of the present invention, when the detecting/reporting UE is to be handed over to the detected cell, the first handover between the serving eNB and the neighbour eNB that do not yet have an established mutual X2 interface is always an S1 handover.

The S1 handover procedure is not impacted by the ANR procedure. Using an ANR independent S1 handover procedure for the initial handover between the eNBs makes the handover swift, because it does not have to wait for the neighbour and X2 establishments. An additional beneficial consequence is that the establishment of neighbour relation and X2 interface are relieved from the real-time requirement and thus become non-time critical.

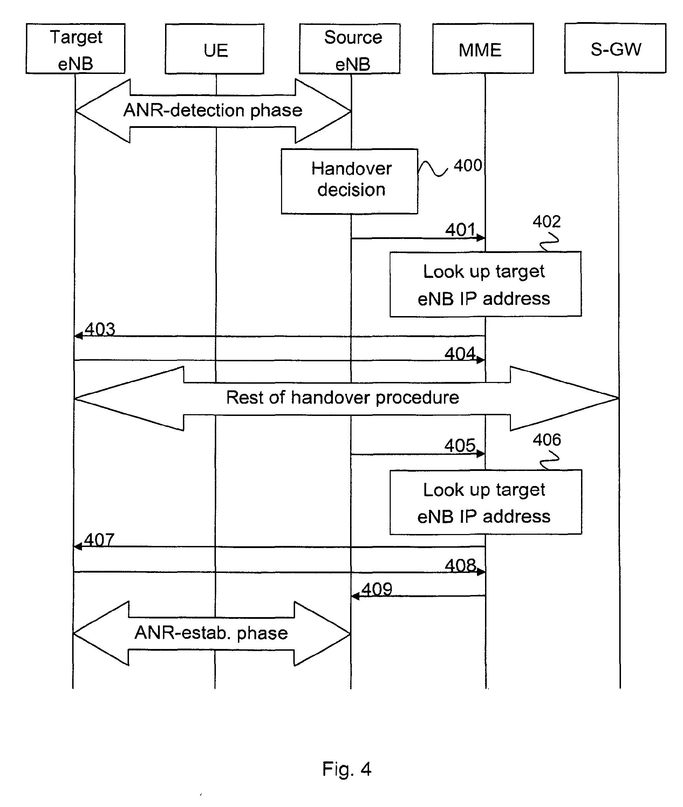

Figure 4 shows a signal diagram according to a first embodiment of the present invention, showing the ANR and initial S1 intra-MME pool handover, i.e. the UE is handed over between two cells belonging to different eNBs, but which eNBs belong to the same MME pool.

Thus, the ANR and initial S1 intra-MME pool handover according to fig. 4 is started when a UE detects a new cell (eNB). During the ANR - detection phase, the UE transmits PCI, CGI, carrier frequency etc to the source eNB. If the TAI is not included in the CGI, it is reported as a separate parameter. Then, a handover decision is taken by the source eNB (step 400) and a HANDOVER REQUIRED message is sent to the MME, shown with arrow 401, including the CGI of the target cell. The MME looks up the target eNB IP address (step 402), or more accurately, a pointer to an SCTP socket and sends a HANDOVER REQUEST message to the target eNB, shown with arrow 403. The target eNB sends a HANDOVER REQUEST ACK message back to the MME, shown with arrow 404. Then the rest of the handover procedure is performed and is not more discussed herein. In parallel with the handover procedure, the source eNB sends a CELL INFO REQUEST message, arrow 405. The MME looks up the target eNB IP address (step 406), or more accurately, a pointer to an SCTP socket and, forwards the CELL INFO REQUEST message, arrow 407 to the target eNB. The target eNB sends the requested cell information in a CELL INFO RESPONSE message back to the MME, shown as arrow 408. The MME forwards the CELL INFO RESPONSE message to the source eNB, shown as arrow 409. Then, the ANR - X2 and neighbour relation establishment phase starts if an ANR-X2-decision and neighbour relation usage decision is taken based on source cell and target cell information and internal configuration.

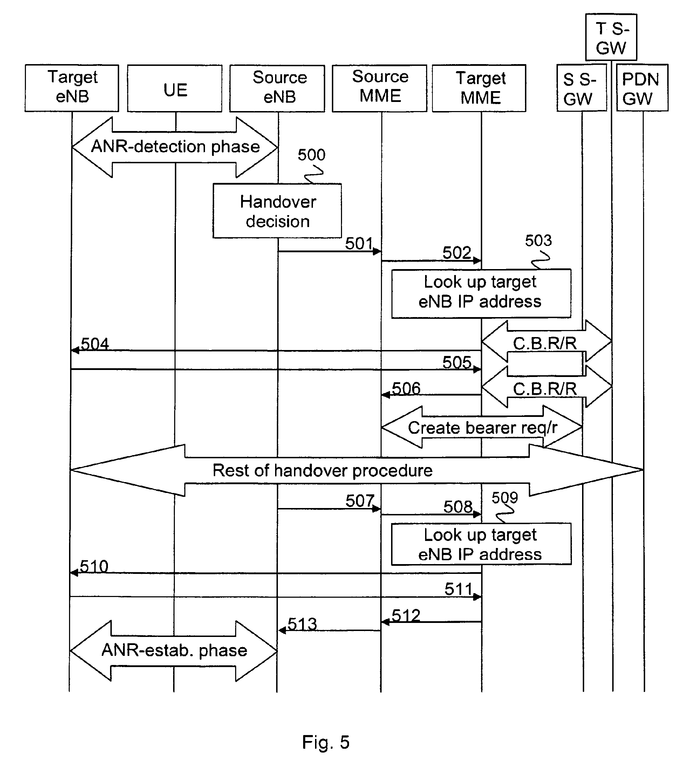

Figure 5 shows a signal diagram according to a second embodiment of the present invention, showing the ANR and initial S1 inter-MME pool handover, i.e. the UE is handed over from a cell belonging to one MME pool to a cell belonging to another MME pool.

Thus, the ANR and initial S1 inter-MME pool handover according to fig. 5 is started when a UE detects a new cell (eNB). During the ANR - detection phase, the UE transmits PCI, CGI, carrier frequency etc to the source eNB. If the TAI is not included in the CGI, it is reported as a separate parameter. Then, a handover decision is taken by the source eNB (step 500) and a HANDOVER REQUIRED message is sent to the source MME, shown with arrow 501. The source MME sends a FORWARD RELOCATION REQUEST message to the target MME, shown with arrow 502, after the target MME has been found based on TAI. The target MME looks up the target eNB IP address (step 503), or more accurately, a pointer to an SCTP socket. The target MME has a CREATE BEARER REQUEST/RESPONSE communication with the target S-GW and then sends a HANDOVER REQUEST message to the target eNB, shown with arrow 504. The target eNB sends a HANDOVER REQUEST ACK message back to the target MME, shown with arrow 505. The target MME has a CREATE BEARER REQUEST/RESPONSE communication with the target S-GW and then sends a FORWARD RELOCATION RESPONSE to the source MME, shown with arrow 506. The source MME has a CREATE BEARER REQUEST/RESPONSE communication with the source S-GW. Then the rest of the handover procedure is performed and is not more discussed herein. In parallel with the handover procedure, the source eNB sends a CELL INFO REQUEST message, arrow 507, to the source MME, which forwards the CELL INFO REQUEST message, arrow 508, to the target MME. The target MME looks up the target eNB IP address (step 509), or more accurately, a pointer to an SCTP socket and, forwards the CELL INFO REQUEST message, arrow 510 to the target eNB. The target eNB sends the requested cell information in a CELL INFO RESPONSE message back to the target MME, shown as arrow 511. The target MME sends the CELL INFO RESPONSE message to the source MME, arrow 512, which forwards the CELL INFO RESPONSE message to the source eNB, shown as arrow 513. Then, the ANR - X2 and neighbour relation establishment phase starts if an ANR-X2-decision and neighbour relation usage decision is taken based on source cell and target cell information and internal configuration.

In the messages of the handover procedure in the direction from the source eNB to the target eNB (i.e. the HANDOVER REQUIRED, FORWARD RELOCATION REQUEST and HANDOVER REQUEST messages) the CGI (and its included parts) of the target/detected cell is included and is used as the basis for routing the messages to the correct target MME and target eNB and to indicate the concerned cell (i.e. the target cell) in the target eNB.

The source MME uses the TAI of the target/detected cell to determine the target MME (or rather to determine the target MME pool out of which a target MME is selected). Hence, if the TAI cannot be extracted from the CGI, then the TAI (or at least the TAC since the PLMN ID is included in the CGI) has to be included as a separate parameter in the message from the source eNB (i.e. the HANDOVER REQURIED message).

The target MME uses the CGI to determine the target eNB, to which the information should be relayed. To support determination of the target eNB each MME has a table including the CGIs of all the cells belonging to the eNBs served by the MME, each CGI in the table being associated with an indication of the eNB owning the cell with the CGI. This eNB indication may be the eNB's IP address or a pointer to the SCTP socket associated with the SCTP connection between the MME and the concerned eNB. The CGI-eNB indication table is preferable dynamically created as the S1 interfaces to the eNBs are established. That is, when the S1 interface between a new eNB and a serving MME is established, the eNB conveys the CGIs of all its cells as well as its IP address (implicitly conveyed during the SCTP connection establishment) to the MME. This is repeated for every MME in the MME pool serving the eNB. Any subsequent changes in the relevant eNB/cell data are also conveyed to the MMEs of the serving MME pool. If the eNB IP address changes, the eNB-MME SCTP connection (to each MME in the pool) has to be re-established, so the MME is automatically informed of the address change. If the CGI of a cell is changed, or if a new cell is deployed in the eNB or an old cell is removed, then the eNB informs the MMEs in the MME pool (possibly using a new type of S1 message). As a less preferable alternative an O&M node, e.g. an Operation Support System (OSS), may inform the MMEs of changed/new/removed CGIs. Thus, configuration and maintenance of the CGI-eNB indication table is automatic (plug-and-play).

The target eNB uses the CGI to determine which of its cells the handover concerns (i.e. which cell that is the target cell).

After the S1 handover procedure the two eNBs exchange information over S1/S10. The exchanged information is transparent to the relaying MME(s) (i.e. a relaying MME does not try to interpret the exchanged information - it is relayed as transparent, or opaque, chunks of data).

For this information exchange the serving eNB sends its information, in a new type of message, over S1 to the serving MME. In an inter-MME pool scenario the serving MME forwards, in a new type of message, the information to the target MME over S10. The target MME (which in an intra-MME pool scenario is the same as the serving MME) forwards the information, in a new type of message, to the detected eNB. The detected eNB responds by returning the relevant information, which is relayed in the reverse direction (using new type of messages) to the serving eNB. The messages used for this information exchange are tentatively labelled CELL INFO REQUEST and CELL INFO RESPONSE over both S1 and S10 in fig. 4 and fig. 5.

In the messages in the direction from the detecting eNB to the detected eNB the CGI (and its included parts) of the detected cell is included and is used as the basis for routing the messages to the correct detected MME and detected eNB as well as to indicate to the detected eNB which of its cells that is the detected cell. This routing and cell indication is performed in the same manner as described above for the S1 handover procedure (which also means that if the TAI cannot be extracted from the CGI, then the TAI/TAC has to be included as a separate parameter in the message from the detecting eNB to the detecting MME).

After the message exchange the eNBs determine whether a neighbour relation should be established and what it should be used for and whether an X2 interface should be established. If the detecting eNB determines that an X2 interface should be established, it initiates the X2 establishment by directly (without going via an MME) contacting the detected eNB, using the IP address of the detected eNB received during the preceding information exchange. The detected eNB may reject the X2 establishment if desired. If the detecting eNB does not determine that an X2 interface is needed, the detected eNB may still choose to initiate the X2 establishment, which then may be accepted or rejected by the detecting eNB.

To avoid colliding X2 establishment attempts, one of the eNBs should be the default initiator. The other eNB, i.e. the eNB that is not the default X2 initiator, should wait a predetermined time for an X2 establishment initiation from the default initiator before attempting a possible X2 initiation itself. Which eNB that is the default X2 initiator should be specified beforehand. It is proposed that it is the detecting eNB, but alternatively it may be the detected eNB. Yet an alternative is that the roles are dynamically settled during the preceding information exchange. For instance, the detecting eNB may in the initial information transfer indicate which of the eNBs that should be the default X2 initiator or it may be determined based on information originating from both eNBs.

When X2 is established, the two eNBs may (preferably), in accordance with the invention, exchange the CGIs of all their respective cells, to be used to facilitate possible future neighbour relation establishments between cells of the two eNBs.

Now consider a case when the detecting/reporting UE is not to be handed over to the detected cell. In this case the overall process obviously does not contain any handover procedure. This is however the only difference from the process described above for a case including a handover. The first phase of the ANR procedure (detecting and reporting neighbour cell data by the UE) and the cell information exchange neighbour relation and/or X2 establishment phases are unchanged.

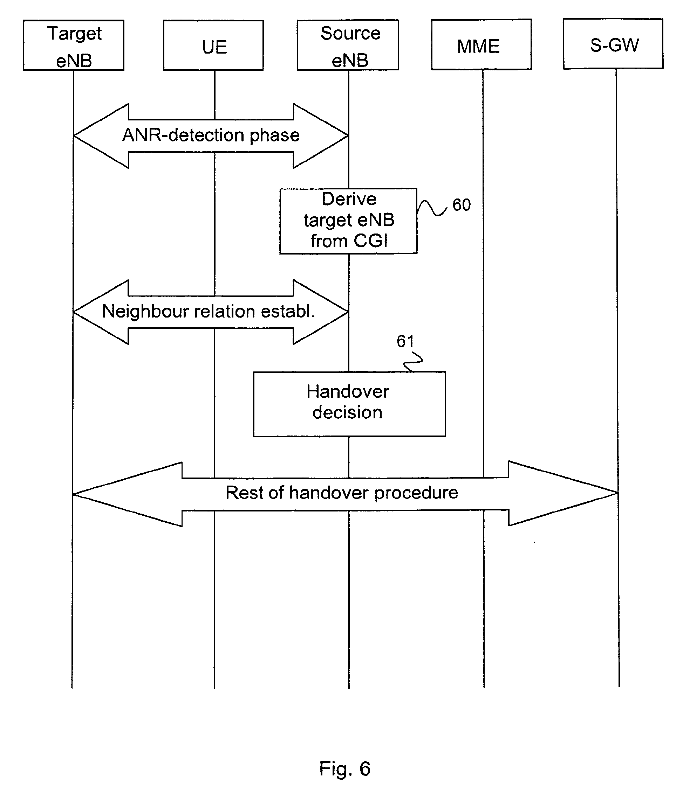

Figure 6 shows a signal diagram according to a third embodiment of the present invention, which is the ANR procedure between two cells, whose respective eNBs already share a mutual X2 interface. The process may or may not involve a handover of the detecting/reporting UE.

The initial ANR phase (i.e. detecting and reporting of neighbour cell data by the UE) is the same as previously described. Provided that the two involved eNBs have exchanged the CGIs of their respective cells (which they, as previously described, may preferably do upon X2 establishment), the detecting eNB determines the target eNB from the reported CGI (step 60). Since the detecting eNB already share an X2 interface with the detected eNB, the CGI also indicates the X2 interface to be used (the detecting eNB may e.g. translate the reported CGI into a pointer to an SCTP socket for the concerned X2 interface).

The two eNBs now exchange the previously listed cell information (optionally excluding the eNB IP addresses) over the X2 interface and determines whether a neighbour relation between the two cells should be established and, if so, what the neighbour relation should be used for (e.g. handovers or only other purposes). Presumably the neighbour relation should be used for handovers and the UE is then handed over to the detected cell using a regular X2 handover procedure (step 61).

If the two eNBs had not exchanged the CGIs of these cells before, and in particular if the detecting eNB was not previously aware of the reported CGI, then the eNBs would have had to use the same procedure as previously described for an initial S1 handover.

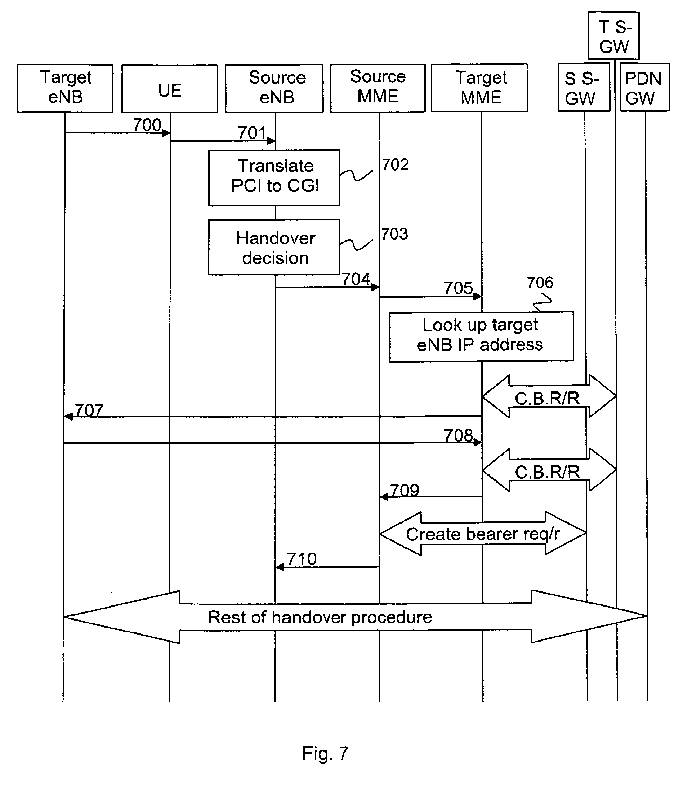

Figure 7 shows a signal diagram according to a fourth embodiment of the present invention, which is a subsequent S1 handover. Both intra-MME pool and inter-MME pool S1 handovers are conceivable, although an inter-MME pool handover is more likely as a subsequent S1 handover, since subsequent intra-MME pool handovers (i.e. after the initial handover and neighbour relation establishment) will in most cases be performed over the X2 interface. Since this is not the first handover between the cells there is no ANR procedure involved. The S1 handover procedure is thus a regular handover procedure. The refinement proposed in the embodiment is to use the CGI (and separate TAI/TAC if needed) for determining the target eNB and, for inter-MME pool handovers, the target MME pool. This is done as previously described.

Thus, the procedure for an inter-MME pool handover, according to fig. 7, is started when the UE reads the physical cell identity (PCI) of the target eNB (the target cell), shown with arrow 700, and sends a measurement report including the target cell PCI to its source eNB, shown with arrow 701, whereby the source eNB translate the PCI to a CGI (step 702). Then, a handover decision is taken by the source eNB (step 703) and a HANDOVER REQUIRED message is sent to the source MME, shown with arrow 704. The source MME sends a FORWARD RELOCATION REQUEST message to the target MME, shown with arrow 705, after the target MME has been found based on TAI. The target MME looks up the target eNB IP address (step 706), or more accurately, a pointer to an SCTP socket. The target MME has a CREATE BEARER REQUEST/RESPONSE communication with the target S-GW and then sends a HANDOVER REQUEST message to the target eNB, shown with arrow 707. The target eNB sends a HANDOVER REQUEST ACK message back to the target MME, shown with arrow 708. The target MME has a CREATE BEARER REQUEST/RESPONSE communication with the target S-GW and then sends a FORWARD RELOCATION RESPONSE to the source MME, shown with arrow 709. The source MME has a CREATE BEARER REQUEST/RESPONSE communication with the source S-GW and sends a handover command to the source eNB, shown with arrow 710. Then the rest of the handover procedure is performed and is not discussed more herein.

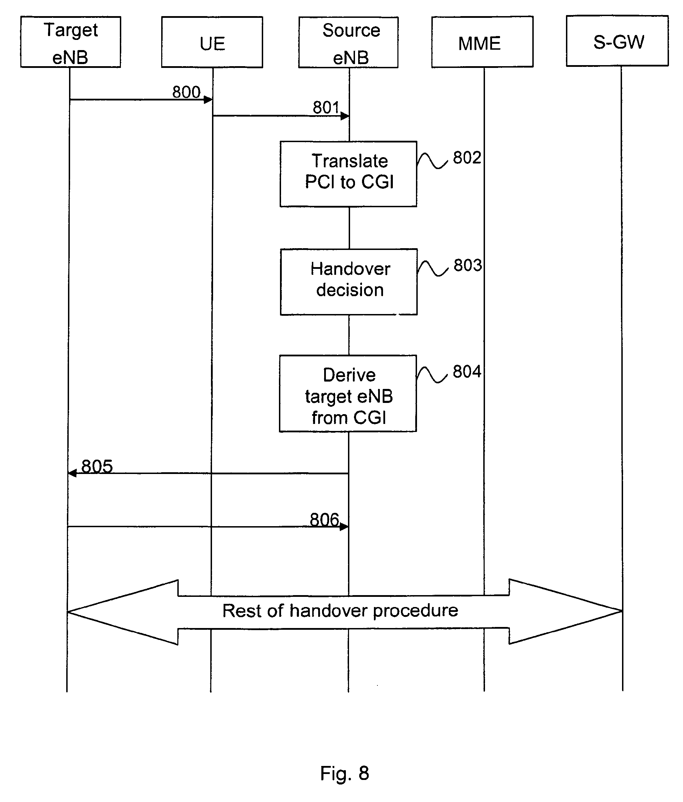

Figure 8 shows a signal diagram according to a fifth embodiment of the present invention, which is a subsequent X2 handover, i.e. a handover between two cells, which already share a neighbour relation and whose eNBs already have a mutual X2 interface established. Since this is not the initial handover between the two cells, there is no ANR procedure involved. The X2 handover procedure is a regular X2 handover procedure. The source eNB receives the PCI of the target cell in the measurement report from the UE. The source eNB translates the PCI into the (known) CGI of the target cell and decides whether or not to perform a handover. Presumably, a handover is decided. The source eNB then uses the CGI of the target cell to determine the target eNB and X2 interface to be used (e.g. by translating the CGI into a pointer to an SCTP socket) and hands over the UE to the target cell (and target eNB).

Thus, the procedure according to fig. 8, is started when the UE reads the physical cell identity (PCI) of the target eNB (the target cell), shown with arrow 800, and sends a measurement report including the target cell PCI to its source eNB, shown with arrow 801, whereby the source eNB translate the PCI to a CGI (step 802). Then, a handover decision is taken by the source eNB (step 803). The source eNB uses the CGI of the target cell to determine the target eNB and X2 interface to be used (step 804) and sends a HANDOVER REQUEST message to the target eNB, shown with arrow 805. The target eNB sends a HANDOVER REQUEST ACK message back to the source eNB, shown with arrow 806. Then the rest of the handover procedure is performed and is not discussed more herein.

It is also interesting to consider what happens when an eNB is moved from one MME pool to another. This is a test of the plug-and-play properties during configuration changes.

When an eNB is moved to a new MME pool, its S1 interfaces to the old MME pool are torn down and new S1 interfaces to the MMEs of the new MME pool are established. These S1 interfaces may be established in the regular manner. According to the proposed solution this means that the new MMEs are informed of the CGIs of the cells of the new eNB.

The moved eNB informs its X2 neighbours of the changes in the relevant cell data, including the MMEGI and possible new TAC(s). The eNB has probably kept its IP address(es) during the move and may thus inform its X2 neighbours over the X2 interfaces. However, if its IP address for the X2 interfaces have changed, its X2 interfaces will not be usable and the information has to be transferred over S1 (and S10 if needed) and may then also include the new IP address of the moved eNB.

Taking the new cell data into account each pair of involved eNBs (i.e. the moved eNB and each of its X2 neighbour eNBs) now reconsiders the existence and usage of the existing inter-eNB neighbour relations, as well as the existence and usage of the X2 interface. For each cell neighbour relation they may decide to keep the neighbour relation, change its usage or remove the neighbour relation altogether. For the X2 interface they may decide to tear it down, keep it but with changed usage or keep it unchanged. If they decide to keep it, but the X2 interface is no longer usable (because of a changed IP address), then the X2 interface has to be re-established.

The moved eNB also informs its S1 neighbour eNBs of the changes in the relevant cell data, including the MMEGI and possible new TAC(s) (and a possible new IP address). Taking the new cell data into account each pair of involved eNBs (i.e. the moved eNB and each of its S1 neighbour eNBs) now reconsiders the existence and usage of the existing inter-eNB neighbour relations. They also consider whether the changed cell data (in particular the new MMEGI) motivates establishment of an X2 interface. For each cell neighbour relation they may decide to keep the neighbour relation, change its usage or remove the neighbour relation altogether. Regarding the potential X2 interface, the eNBs decide whether or not to establish an X2 interface and, if so, what it should be used for (e.g. handover or only other purposes such as ICIC). The X2 interface may be established as previously described.

A possible variation of the above described solution is to integrate the ANR inter-eNB information exchange in the S1 handover procedure. During the S1 handover procedure the eNBs (as currently specified) exchange so-called "transparent containers". These transparent containers contain handover related data, which is relayed transparently (i.e. uninterpreted) by the MME(s) over S1 and S10. The cell related information, which is exchanged between eNBs during the ANR process, could be included in these transparent containers, instead of in separate ANR related messages. This variation/optimization could be used when the ANR process is performed in conjunction with an S1 handover

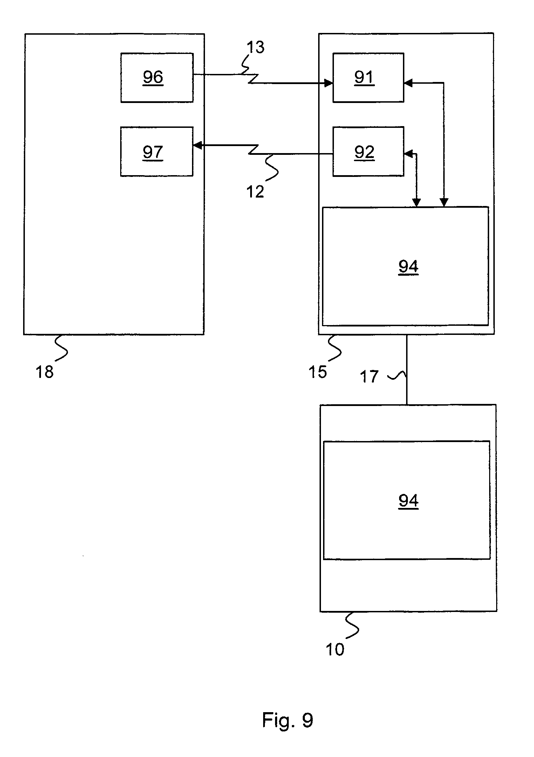

Figure 9 is a block diagram showing a user equipment 18, a radio base station (RBS) 15, such as eNode B, and a mobility management entity (MME) 10 for establishing a relation between a newly detected radio base station and existing radio base stations in a communication network system, which comprises radio base stations each serving at least one cell and communicating with at least one communication network entity, such as the MME, on a first communication interface, such as S1, communicating with each other on a second communication interface, such as X2, and communicating with user equipments over a radio interface.

The RBS 15 (which is a communication network node) comprises a radio transmitter 92 and a receiver 91. The transmitter 92 is transmitting data to a receiver 97 of the user equipment 18 over a radio interface on the downlink channel 12. The receiver 91 is receiving data from the user equipment 18 on the uplink channel 13. The RBS 15 optionally further comprises a communication unit 94 configured to initially transmit handover messages over said first communication network interface 17, when a user equipment is to be handed over to said newly detected radio base station before a relation between said detected radio base station and an existing radio base station serving said user equipment is established.

The user equipment 18 comprises a radio transmitter 96 arranged to transmit data packets to the receiver 91 of the RBS 15 over the radio interface on the uplink channel 13 and a receiver 97 arranged to receive data packets transmitted from the transmitter 92 of the RBS 15 on the downlink channel 12.

The MME 10 (which is a communication network node) is communicating with the RBS 15 via the interface 17 and optionally comprises a communication unit 94 configured to initially transmit handover messages over said first communication network interface 17, when a user equipment is to be handed over to said newly detected radio base station before a relation between said detected radio base station and an existing radio base station serving said user equipment is established.

According to some embodiments, said communication unit 94 further is arranged to independently from said handover, exchange neighbour relation information between said detected radio base station and said serving radio base station as signalling over said first communication network interface.

According to some embodiments, said communication unit 94 further is arranged to piggy-back said initial handover messages on said neighbour relation information signalling.

According to some embodiments, said neighbour relation information sent over said first communication network interface is transparent for said at least one communication network entity.

According to some embodiments, said neighbour relation information sent over said first communication network interface is non-transparent for said at least one communication network entity.

According to some embodiments, said communication unit 94 further is arranged to establish a neighbour relation on said second communication network interface between said serving radio base station and said detected radio base station.

According to some embodiments, a solution has been presented which fills the gaps and overcomes the shortcomings of the currently existing technology and which supports all the relevant use cases and tasks.
- The first handover between two eNBs is always performed over S1/S10 prior to X2 establishment.
- In parallel the initial handover neighbor eNBs exchange cell information over S1/S10 and may establish X2.
   - The inter-eNB ANR information exchange is independent of the handover procedure.
   - Separate, dedicated S1 and S10 messages are used.
   - The exchanged information is transparent/opaque for the relaying MME(s).
- If X2 is established, subsequent neighbor relations are established via X2
- A source MME determines the target MME pool (out of which a target MME is selected) based on the TAI of the target cell.
- A target MME determines the target eNB based on the CGI of the target cell.
- CGI-to-eNB IP address translation is performed by (and integrated in) the MME (instead of by the source eNB using DNS).
   - Automatic (plug-and-play) configuration of CGI-to-eNB IP address translation table.
   - Faster eNB IP address retrieval and S1 handover.

Thus, while there have been shown and described and pointed out fundamental novel features of the invention as applied to a preferred embodiment thereof, it will be understood that various omissions and substitutions and changes in the form and details of the devices illustrated, and in their operation, may be made by those skilled in the art without departing from the spirit of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

Expressions such as "including", "comprising", "incorporating", "consisting of", "have", "is" used to describe and claim the present invention are intended to be construed in a non-exclusive manner, namely allowing for items, components or elements not explicitly described also to be present. Reference to the singular is also to be construed to relate to the plural and vice versa.

Numerals included within parentheses in the accompanying claims are intended to assist understanding of the claims and should not be construed in any way to limit subject matter claimed by these claims.

## Claims

1. A method of establishing a relation between a newly detected radio base station (15b) and existing radio base stations (15a) in a communication network system, which comprises radio base stations (15) each serving at least one cell (19) and communicating with at least one communication network entity (10) on a first communication interface (17), communicating with each other on a second communication interface (16), and communicating with user equipments (18) over a radio interface, **characterized in that**
when a user equipment (18) had detected said newly detected radio base station (15b) and reported this detection to an existing radio base station (15a) serving said user equipment (18), before connectivity on the second communication interface (16) is established between said detected radio base station (15b) and the existing radio base station (15a) serving said user equipment (18), the method comprises the step of
*exchanging* neighbour relation information between said detected radio base station (15b) and serving radio base station as signalling over said first communication network interface (17).

2. A method according to claim 1, the method further comprises the step of said existing radio base station (15a) serving said user equipment (18)
*deciding* to hand over said user equipment (18) from said existing radio base station (15a) serving said user equipment (18) to said newly detected radio base station (15b); and
*initially transmitting* handover messages over said first communication network interface (17).

3. A method according to claim 2, the method further comprises the step of *piggy-backing* said initial handover messages on said neighbour relation information signalling.

4. A method according to any of the claims 1-3, wherein said neighbour relation information sent over said first communication network interface is transparent for said at least one communication network entity.

5. A method according to any of the claims 1-3, wherein said neighbour relation information sent over said first communication network interface is non-transparent for said at least one communication network entity.

6. A method according to any of the preceding claims, the method further comprises the step of
*establishing* a neighbour relation on said second communication network interface between said serving radio base station and said detected radio base station.

7. A communication unit (94) for establishing a relation between a newly detected radio base station (15b) and existing radio base stations (15a) in a communication network system, which comprises radio base stations (15) each serving at least one cell (19) and communicating with the at least one communication network entity (10, 15) on a first communication interface (17), the radio base stations (15) communicating with each other on a second communication interface (16), and communicating with user equipments (18) over a radio interface, **characterized in that**
when a user equipment (18) has detected said newly detected radio base station (15b) and reported this detection to an existing radio base station (15a) serving said user equipment (18), before connectivity on the second communication interface (16) is established between said detected radio base station (15b) and the existing radio base station (15a) serving said user equipment (18),
*the communication unit* (94) is arranged to exchange neighbour relation information between said detected radio base station (15b) and said serving radio base station (15a) as signalling over said first communication network interface (17).

8. A communication unit (94) according to claim 7, wherein when said existing radio base station (15a) serving said user equipment (18) has decided to hand over said user equipment (18) from said existing radio base station (15a) serving said user equipment (18) to said newly detected radio base station (15b); said communication unit (94) further is arranged to initially transmit handover messages over said first communication network interface (17).

9. A communication unit (94) according to claim 8, wherein said communication unit (94) further is arranged to piggy-back said initial handover messages on said neighbour relation information signalling.

10. A communication unit (94) according to any of the claims 7-9, wherein said neighbour relation information sent over said first communication network interface (17) is transparent for said at least one communication network entity (10).

11. A communication unit (94) according to any of the claims 7-9, wherein said neighbour relation information sent over said first communication network interface (17) is non-transparent for said at least one communication network entity (10).

12. A communication unit (94) according to any of the claims 7-11, wherein said communication unit (94) further is arranged to establish a neighbour relation on said second communication network interface (16) between said serving radio base station (15a) and said detected radio base station (15b).

13. A communication unit (94) according to any of the claims 7-12, wherein the communication unit (94) is located in a Mobility Management Entity (MME) network node (10) or a radio base station (15).

## Patentansprüche

1. Verfahren zum Einrichten einer Beziehung zwischen einer neu ermittelten Funkbasisstation (15b) und bestehenden Funkbasisstationen (15a) in einem Kommunikationsnetzwerksystem, das Funkbasisstationen (15) umfasst, die jeweils mindestens eine Zelle (19) versorgen und mit mindestens einer miteinander auf einer zweiten Kommunikationsschnittstelle (16) kommunizieren und mit Kommunikationsnetzwerkinstanz (10) auf einer ersten Kommunikationsschnittstelle (17) kommunizieren, Benutzereinrichtungen (18) über eine Funkschnittstelle kommunizieren, **dadurch gekennzeichnet, dass**:
wenn eine Benutzereinrichtung (18) die neu ermittelte Funkbasisstation (15b) ermittelt und diese Ermittlung einer bestehenden Funkbasisstation (15a), die diese Benutzereinrichtung (18) versorgt, gemeldet hat, bevor Konnektivität auf der zweiten Kommunikationsschnittstelle (16) zwischen der ermittelten Funkbasisstation (15b) und der bestehenden Funkbasisstation (15a), welche die Benutzereinrichtung (18) versorgt, hergestellt wird, das Verfahren den Schritt umfasst:
Austauschen von Nachbarbeziehungsinformation zwischen der ermittelten Funkbasisstation (15b) und der versorgenden Funkbasisstation als Signalisierung über die erste Kommunikationsnetzwerkschnittstelle (17).

2. Verfahren nach Anspruch 1, wobei das Verfahren ferner den Schritt umfasst:
durch die bestehende Funkbasisstation (15a), welche die Benutzereinrichtung (18) versorgt:
Entscheiden, die Benutzereinrichtung (18) von der bestehenden Funkbasisstation (15a), welche die Benutzereinrichtung (18) versorgt, zu der neu ermittelten Funkbasisstation (15b) zu übergeben; und
anfängliches Übertragen von Verbindungsübergabenachrichten über die erste Kommunikationsschnittstelle (17).

3. Verfahren nach Anspruch 2, wobei das Verfahren ferner den Schritt umfasst:
Huckepackbefördern der anfänglichen Verbindungsübergabenachrichten auf der Nachbarbeziehungsinformationssignalisierung.

4. Verfahren nach einem der Ansprüche 1 bis 3, wobei die über die erste Kommunikationsnetzwerkschnittstelle gesendete Nachbarbeziehungsinformation für die mindestens eine Kommunikationsnetzwerkinstanz transparent ist.

5. Verfahren nach einem der Ansprüche 1 bis 3, wobei die über die erste Kommunikationsnetzwerkschnittstelle gesendete Nachbarbeziehungsinformation für die mindestens eine Kommunikationsnetzwerkinstanz nicht transparent ist.

6. Verfahren nach einem der vorhergehenden Ansprüche, wobei das Verfahren ferner den Schritt umfasst:
Einrichten einer Nachbarbeziehung auf der zweiten Kommunikationsnetzwerkschnittstelle zwischen der versorgenden Funkbasisstation und der ermittelten Funkbasisstation.

7. Kommunikationseinheit (94) zum Einrichten einer Beziehung zwischen einer neu ermittelten Funkbasisstation (15b) und bestehenden Funkbasisstationen (15a) in einem Kommunikationsnetzwerksystem, das Funkbasisstationen (15) umfasst, die jeweils mindestens eine Zelle (19) versorgen und mit mindestens einer Kommunikationsnetzwerkinstanz (10, 15) auf einer ersten Kommunikationsschnittstelle (17) kommunizieren, wobei die Funkbasisstationen (15) miteinander auf einer zweiten Kommunikationsschnittstelle (16) kommunizieren und mit Benutzereinrichtungen (18) über eine Funkschnittstelle kommunizieren, **dadurch gekennzeichnet, dass**:
wenn eine Benutzereinrichtung (18) die neu ermittelte Funkbasisstation (15b) ermittelt und diese Ermittlung einer bestehenden Funkbasisstation (15a), die diese Benutzereinrichtung (18) versorgt, gemeldet hat, bevor Konnektivität auf der zweiten Kommunikationsschnittstelle (16) zwischen der ermittelten Funkbasisstation (15b) und der bestehenden Funkbasisstation (15a), welche die Benutzereinrichtung (18) versorgt, hergestellt wird:
die Kommunikationseinheit (94) dafür eingerichtet ist, Nachbarbeziehungsinformation zwischen der ermittelten Funkbasisstation (15b) und der versorgenden Funkbasisstation als Signalisierung über die erste Kommunikationsnetzwerkschnittstelle (17) auszutauschen.

8. Kommunikationseinheit (94) nach Anspruch 7, wobei, wenn die bestehende Funkbasisstation (15a), welche die Benutzereinrichtung (18) versorgt, entschieden hat, die Benutzereinrichtung (18) von der bestehenden Funkbasisstation (15a), welche die Benutzereinrichtung (18) versorgt, zu der neu ermittelten Funkbasisstation (15b) zu übergeben, die Kommunikationseinheit (94) ferner dafür eingerichtet ist, Verbindungsübergabenachrichten anfangs über die erste Kommunikationsschnittstelle (17) zu übertragen.

9. Kommunikationseinheit (94) nach Anspruch 8, wobei die Kommunikationseinheit (94) ferner dafür eingerichtet ist, die anfänglichen Verbindungsübergabenachrichten huckepack auf der Nachbarbeziehungsinformationssignalisierung zu befördern.

10. Kommunikationseinheit (94) nach einem der Ansprüche 7 bis 9, wobei die über die erste Kommunikationsnetzwerkschnittstelle (17) gesendete Nachbarbeziehungsinformation für die mindestens eine Kommunikationsnetzwerkinstanz transparent ist.

11. Kommunikationseinheit (94) nach einem der Ansprüche 7 bis 9, wobei die über die erste Kommunikationsnetzwerkschnittstelle (17) gesendete Nachbarbeziehungsinformation für die mindestens eine Kommunikationsnetzwerkinstanz nicht transparent ist.

12. Kommunikationseinheit (94) nach einem der Ansprüche 7 bis 11, wobei die Kommunikationseinheit (94) ferner dafür eingerichtet ist, eine Nachbarbeziehung auf der zweiten Kommunikationsnetzwerkschnittstelle (16) zwischen der versorgenden Funkbasisstation (15a) und der ermittelten Funkbasisstation (15b) einzurichten.

13. Kommunikationseinheit (94) nach einem der Ansprüche 7 bis 12, wobei die Kommunikationseinheit (94) in einem Mobilitätsverwaltungsinstanz-(MME-)Netzwerkknoten (10) oder einer Funkbasisstation (15) angeordnet ist.

## Revendications

1. Procédé destiné à établir une relation entre une station de base radio nouvellement détectée (15b) et des stations de base radio existantes (15a) dans un système de réseau de communication, lequel comprend des stations de base radio (15) desservant chacune au moins une cellule (19) et communiquant avec au moins une entité de réseau de communication (10) sur une première interface de communication (17), communiquant les unes avec les autres sur une seconde interface de communication (16), et communiquant avec des équipements utilisateur (18) sur une interface radio, **caractérisé en ce que** :
lorsqu'un équipement utilisateur (18) a détecté ladite station de base radio nouvellement détectée (15b) et a signalé cette détection à une station de base radio existante (15a) desservant ledit équipement utilisateur (18), avant que la connectivité sur la seconde interface de communication (16) soit établie entre ladite station de base radio détectée (15b) et la station de base radio existante (15a) desservant ledit équipement utilisateur (18), le procédé comprend l'étape ci-dessous consistant à :
échanger des informations de relation de voisinage entre ladite station de base radio détectée (15b) et ladite station de base radio de desserte, sous la forme d'une signalisation sur ladite première interface de réseau de communication (17).

2. Procédé selon la revendication 1, dans lequel le procédé comprend en outre l'étape dans laquelle
ladite station de base radio existante (15a) desservant ledit équipement utilisateur (18) :
décide de transférer ledit équipement utilisateur (18) de ladite station de base radio existante (15a) desservant ledit équipement utilisateur (18) à ladite station de base radio nouvellement détectée (15b) ; et
transmet initialement des messages de transfert intercellulaire sur ladite première interface de réseau de communication (17).

3. Procédé selon la revendication 2, dans lequel le procédé comprend en outre l'étape ci-dessous consistant à :
superposer lesdits messages de transfert intercellulaire initiaux sur ladite signalisation d'informations de relation de voisinage.

4. Procédé selon l'une quelconque des revendications 1 à 3, dans lequel lesdites informations de relation de voisinage envoyées sur ladite première interface de réseau de communication sont transparentes pour ladite au moins une entité de réseau de communication.

5. Procédé selon l'une quelconque des revendications 1 à 3, dans lequel lesdites informations de relation de voisinage envoyées sur ladite première interface de réseau de communication sont non-transparentes pour ladite au moins une entité de réseau de communication.

6. Procédé selon l'une quelconque des revendications précédentes, dans lequel le procédé comprend en outre l'étape consistant à
établir une relation de voisinage sur ladite seconde interface de réseau de communication entre ladite station de base radio de desserte et ladite station de base radio détectée.

7. Unité de communication (94) destinée à établir une relation entre une station de base radio nouvellement détectée (15b) et des stations de base radio existantes (15a) dans un système de réseau de communication, lequel comprend des stations de base radio (15) desservant chacune au moins une cellule (19) et communiquant avec au moins une entité de réseau de communication (10, 15) sur une première interface de communication (17), les stations de base radio (15) communiquant les unes avec les autres sur une seconde interface de communication (16), et communiquant avec des équipements utilisateur (18) sur une interface radio, **caractérisé en ce que** :
lorsqu'un équipement utilisateur (18) a détecté ladite station de base radio nouvellement détectée (15b) et a signalé cette détection à une station de base radio existante (15a) desservant ledit équipement utilisateur (18), avant que la connectivité sur la seconde interface de communication (16) soit établie entre ladite station de base radio détectée (15b) et la station de base radio existante (15a) desservant ledit équipement utilisateur (18),
l'unité de communication (94) est agencée de manière à échanger des informations de relation de voisinage entre ladite station de base radio détectée (15b) et ladite station de base radio de desserte (15a), sous la forme d'une signalisation sur ladite première interface de réseau de communication (17).

8. Unité de communication (94) selon la revendication 7, dans laquelle lorsque ladite station de base radio existante (15a) desservant ledit équipement utilisateur (18) a décidé de transférer ledit équipement utilisateur (18), de ladite station de base radio existante (15a) desservant ledit équipement utilisateur (18) à ladite station de base radio nouvellement détectée (15b) ; ladite unité de communication (94) est en outre agencée de manière à transmettre initialement des messages de transfert intercellulaire sur ladite première interface de réseau de communication (17).

9. Unité de communication (94) selon la revendication 8, dans laquelle ladite unité de communication (94) est en outre agencée de manière à superposer lesdits messages de transfert intercellulaire initiaux sur ladite signalisation d'informations de relation de voisinage.

10. Unité de communication (94) selon l'une quelconque des revendications 7 à 9, dans laquelle lesdites informations de relation de voisinage envoyées sur ladite première interface de réseau de communication (17) sont transparentes pour ladite au moins une entité de réseau de communication (10).

11. Unité de communication (94) selon l'une quelconque des revendications 7 à 9, dans laquelle lesdites informations de relation de voisinage envoyées sur ladite première interface de réseau de communication (17) sont non-transparentes pour ladite au moins une entité de réseau de communication (10).

12. Unité de communication (94) selon l'une quelconque des revendications 7 à 11, dans laquelle ladite unité de communication (94) est en outre agencée de manière à établir une relation de voisinage sur ladite seconde interface de réseau de communication (16) entre ladite station de base radio de desserte (15a) et ladite station de base radio détectée (15b).

13. Unité de communication (94) selon l'une quelconque des revendications 7 à 12, dans laquelle l'unité de communication (94) est localisée dans un noeud de réseau d'entité de gestion de la mobilité (MME) (10) ou une station de base radio (15).
